# DEMANDE DE BREVET EUROPEEN

(11) **EP 4 804 117 A1**
(43) Date de publication de la demande: **09.09.2026**
(21) Numéro de dépôt: 26162488.6
(22) Date de dépôt: 05.03.2026
(51) Int. Cl.: G06T 5/70, G06T 11/00

(54) **PROCÉDÉ DE GÉNÉRATION D'UNE IMAGE À PARTIR D'UNE CONSIGNE TEXTUELLE, ET PROGRAMME D ORDINATEUR ET SYSTÈME ASSOCIÉS**

(30) Priorité: 05.03.2025 FR 2502212
(71) Demandeur: Commissariat à l'Energie Atomique et aux Energies Alternatives, 75015 Paris (FR)
(72) Inventeur: GRIMAL, Paul, 91191 GIF-SUR-YVETTE CEDEX (FR); LE BORGNE, Hervé, 91191 GIF-SUR-YVETTE CEDEX (FR); FERRET, Olivier, 91191 GIF-SUR-YVETTE CEDEX (FR)
(74) Mandataire: Lavoix

(57) **Abrégé**

La présente invention concerne un procédé de génération d'une image à partir d'une consigne textuelle, comprenant les étapes suivantes :
- initialisation (120) d'une image par un bruit aléatoire ;
- diffusion inverse (140, 240) de l'image comprenant les sous-étapes suivantes :
- calcul (141, 241) d'une pluralité de cartes d'attention en utilisant un modèle de diffusion pré-entrainé ;
- guidage sémantique (142, 242) à partir des cartes d'attention ;

Le procédé est caractérisé en ce qu'il comprend en outre une étape de décomposition (130) de l'image en une image basses fréquences et une image hautes fréquences, et en ce que lors d'au moins certaines itérations de l'étape de diffusion inverse (140), dites itérations améliorées, le guidage sémantique (142) est mis en œuvre uniquement sur l'image basses fréquences.

## Description

La présente invention concerne un procédé de génération d'une image à partir d'une consigne textuelle.

La présente invention concerne également un programme d'ordinateur et un système associés à un tel procédé.

Le domaine de l'invention est celui de génération des images à partir des consignes textuelles, en utilisant des méthodes d'intelligence artificielle.

Il existe dans l'état de la technique des modèles, appelés modèles de diffusion, permettant de générer des images conditionnées par le texte. Parmi ces modèles, on connait notamment un modèle de diffusion stable (en anglais « Stable Diffusion » ou « SD »), appelé également un modèle de diffusion latente (en anglais « Latent Diffusion Model ou « LDM »).

Le principe général de ce type de modèle est d'apprendre un réseau de neurones à débruiter progressivement (étape de diffusion inverse) des images en étant contraint (conditionné) par une consigne textuelle. Après convergence, en appliquant un bruit à l'entrée du réseau de neurones, tout en le contraignant par une consigne textuelle, un tel modèle génère une nouvelle image qui est censée correspondre à la consigne textuelle.

En pratique, même pour des consignes textuelles simples comportant plusieurs objets (et leurs couleurs), il n'est pas rare que les images générées par ce type de modèle comportent des erreurs comme une omission d'un élément spécifié dans la consigne (en anglais « *catastrophic neglect* »), une mauvaise attribution d'un qualificatif (e.g de couleur) à un objet (en anglais *« attribute binding* »), l'attribution d'un qualificatif (couleur) à d'autres objets que ceux demandés (en anglais « *attribute leaking* »), ou le mix de plusieurs objets demandés (en anglais « *subject mixing* »)*.* Les erreurs d'alignement peuvent être quantifiées au moyen d'un score de performance présentant par exemple une métrique de type TIAM, telle que décrite dans le document Grimal, P et al. : « TIAM - A Metric for Evaluating Alignment in Text-to-Image Generation *».*

Pour pallier ces problèmes, le document Hila Chefer et al. : « Attend-and-Excite: Attention-Based Semantic Guidance for Text-to-Image Diffusion Models » propose une méthode appelée GSN (de l'anglais « Generative Semantic Nursing ») avec un modèle A&E (de l'anglais « Attend and Excite »).

Cette méthode comprend deux améliorations.

La première amélioration consiste en un ajout d'un guidage sémantique à chaque étape de la diffusion inverse. Le guidage sémantique consiste à modifier le bruit avec par exemple une descente de gradient, sur une fonction de coût encourageant l'activation conjointe d'une zone de l'image en cours de génération avec chaque mot (en anglais « *token* » ou « jeton » en français) d'importance de la consigne textuelle.

La deuxième amélioration consiste en un raffinement itératif à certaines étapes de la diffusion inverse. Ce procédé consiste à itérer l'étape de débruitage jusqu'à ce que la fonction de coût soit inférieure à un seuil prédéfini ou qu'un nombre d'itérations maximum (prédéfini) soit effectué.

Des améliorations de la méthode GSN ont été proposées dans les documents Li et al. : « Divide & bind your attention for improved generative semantic nursing *»,* Rassin et al. : « Linguistic binding in diffusion models: Enhancing attribute correspondence through attention map alignment *»,* Agarwal et al. : « Test-time attention segregation and retention for text-to-image synthesis *»* et Guo et al. : « Boosting text-to-image diffusion models via initia noise optimization *».* Cependant, ces approches nécessitent de tester et de sélectionner soigneusement plusieurs hyperparamètres sensibles (par exemple, en choisissant différentes étapes de diffusion pour effectuer l'optimisation ou en fixant différents seuils de perte à atteindre pour chaque étape de diffusion), ce qui peut entraîner des échecs potentiels au cours du processus d'optimisation.

Ces améliorations ne permettent toujours pas d'obtenir des résultats souhaitables dans le cas des consignes textuelles complexes.

La présente invention a pour but de remédier à ces inconvénients et de proposer donc des moyens permettant d'obtenir de bons résultats lors de la génération des images même à partir des consignes textuelles complexes.

À cet effet, l'invention a pour objet un procédé de génération d'une image à partir d'une consigne textuelle, comprenant les étapes suivantes :
- initialisation d'une image par un bruit aléatoire ;
- diffusion inverse de l'image comprenant les sous-étapes suivantes :
- calcul d'une pluralité de cartes d'attention en utilisant un modèle de diffusion pré-entrainé ;
- guidage sémantique à partir des cartes d'attention ;
l'étape de diffusion inverse étant mise en œuvre suivant plusieurs itérations.

Le procédé est caractérisé en ce qu'il comprend en outre une étape de décomposition de l'image en une image basses fréquences et une image hautes fréquences, et en ce que lors d'au moins certaines itérations de l'étape de diffusion inverse, dites itérations améliorées, le guidage sémantique est mis en œuvre uniquement sur l'image basses fréquences.

Il a été en effet découvert par les inventeurs que les basses fréquences reflètent la structure générale d'une scène (image) donc le placement des objets alors que les hautes fréquences correspondent aux détails. En effectuant le guidage sémantique sur les basses fréquences seulement, celui-ci peut mieux séparer les objets indiqués dans la consigne textuelle. L'image ainsi générée respecte mieux les consignes textuelles complexes, c'est-à-dire des consignes avec un plus grand nombre d'objets.

Suivant d'autres aspects avantageux de l'invention, le procédé comprend une ou plusieurs des caractéristiques suivantes, prises isolément ou suivant toutes les combinaisons techniquement possibles :
- lors de chaque itération améliorée de l'étape de diffusion inverse, l'extraction des cartes d'attention est mise en œuvre à partir d'une image reconstituée, l'image reconstituée comprenant l'addition de l'image basses fréquences et de l'image hautes fréquences ;
- chaque itération de l'étape de diffusion inverse est une itération améliorée, l'étape de décomposition de l'image étant mise en œuvre avant la première itération de l'étape de diffusion inverse ;
- chaque itération de l'étape de diffusion inverse après N itérations de cette étape est une itération améliorée, l'étape de décomposition de l'image étant mise en œuvre après la N-ième itération de l'étape de diffusion inverse ;
- le nombre N est déterminé en testant le procédé sur plusieurs nombres candidats et en déterminant un score de performance pour chacun de ces nombres, le nombre N retenu correspondant au meilleur score de performance ;
- l'étape de décomposition de l'image est mise en œuvre en utilisant une transformée de Fourier et un filtre passe-bas configuré pour filtrer des fréquences basses suivant un ratio de coupure paramétrable ;
- le ratio de coupure est compris entre 0,1 et 0,2 ;
- le filtre passe-bas est un filtre de Butterworth ;
- le guidage sémantique comprend une descente de gradient sur une fonction de coût calculée à partir des cartes d'attention ;
- le procédé comprenant en outre une étape de détermination d'un score de performance après plusieurs itérations des étapes d'initialisation et de diffusion inverse, le score de performance étant de préférence de type TIAM.

L'invention concerne également un programme d'ordinateur comportant des instructions logicielles qui, lorsqu'elles sont exécutées par un ordinateur, mettent en œuvre le procédé tel que défini ci-dessus.

L'invention a également pour objet un système de génération d'une image à partir d'une consigne textuelle, comprenant des moyens techniques configurés pour mettre en œuvre le procédé tel que défini ci-dessus.

La description qui va suivre est donnée uniquement au titre d'un exemple non-limitatif et faite en référence aux dessins annexés, sur lesquels :
- [Fig. 1] la figure 1 est une vue schématique d'un système de génération selon l'invention ;
- [Fig. 2] la figure 2 est un organigramme d'un procédé de génération selon un premier mode de réalisation l'invention, le procédé étant mis en œuvre par le système de génération de la figure 1 ;
- [Fig. 3] la figure 3 est un organigramme d'un procédé de génération selon un deuxième mode de réalisation l'invention, le procédé étant mis en œuvre par le système de génération de la figure 1 ;
- [Fig. 4] la figure 4 est une vue schématique illustrant de la mise en œuvre du procédé de génération de la figure 2 ; et
- [Fig. 5] la figure 5 est une vue schématique illustrant des résultats comparatifs du procédé de génération de la figure 2 avec d'autres méthodes connues.

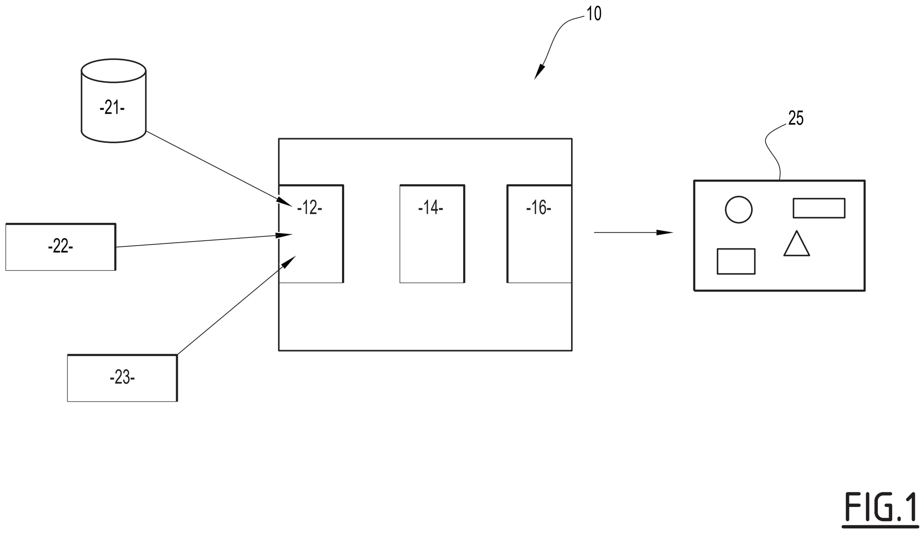

On a en effet illustré sur la figure 1 un système de génération 10 selon l'invention.

Ce système de génération 10 permet de générer une image à partir d'une consigne textuelle, connue dans la littérature anglo-saxonne sous le terme de *prompt.*

En particulier, chaque consigne textuelle comprend une phrase qui doit correspondre à une image. Cette phrase comprend notamment un ou plusieurs objets correspondant alors à des objets qui peuvent être visualisés sur l'image finale. Ces objets, appelés dans la littérature anglo-saxonne *token* (ou « jeton » en français), correspondent, par exemple, à tout objet de la vie quotidienne tel qu'un animal, un objet dans la rue, un véhicule, etc.

La phrase formant la consigne textuelle comprend en outre des expressions de liaison formant des caractéristiques des objets cités dans la phrase ou alors des liens entre ces objets.

Ces caractéristiques ou ces liens doivent également apparaître sur l'image finale générée par le système de génération 10.

Différents exemples d'application du système de génération 10 sont possibles.

Ainsi, selon un exemple de réalisation, le système de génération 10 permet de créer des données visuelles à but illustratif ou artistique.

Selon un autre exemple de réalisation, le système de génération 10 met en œuvre une pseudo anonymisation de données visuelles. Par exemple, dans le domaine médical, le système de génération 10 permet de créer des images réalistes vis-à-vis de certains symptômes, sans que cela corresponde exactement à un patient particulier.

Selon encore un autre exemple de réalisation, le système de génération 10 permet de créer des corpus d'images synthétiques pour l'entraînement des modèles de vision par ordinateur. Cela peut comprendre la tâche de classification, de détection, de comptage, de segmentation, etc. Dans cet exemple, un cas particulier consiste à créer des corpus bien équilibrés vis-à-vis d'attributs sensibles, tels que l'âge, le genre, la couleur de la peau ou l'origine géographique des personnes. Cela contribue à ce que les méthodes apprises sur ces corpus ne soient pas biaisées vis-à-vis de certaines personnes.

Bien entendu, de nombreuses autres applications du système de génération 10 sont également possibles.

En référence à la figure 1, le système de génération 10 comprend un module d'entrée 12, un module de traitement 14 et un module de sortie 16.

Ces différents modules 12 à 16 sont par exemple implémentés sous la forme des logiciels. Dans en tel cas, le système de génération 10 comprend en outre un processeur permettant d'exécuter ces logiciels ainsi qu'une mémoire permettant de les stocker. Autrement dit, dans un tel cas, le système de génération 10 peut correspondre à un ordinateur ou alors à une pluralité d'ordinateurs connectés entre eux, par exemple, via un réseau informatique.

Alternativement ou en complément, au moins certains de ces modules 12 à 16 représentent au moins partiellement un circuit logique programmable tel que le circuit de type FPGA (de l'anglais *Field Programmable Gate Arrey*).

Le module d'entrée 12 permet de recevoir des données d'entrée nécessaires au fonctionnement du système de génération 10.

En particulier, le module d'entrée 12 est connecté à une base de données 21 comprenant notamment un modèle de diffusion. Ce modèle de diffusion a été pré-entraîné sur un grand volume de données comprenant notamment des images. Ce modèle de diffusion comprend notamment un réseau de neurones qui est configuré pour recevoir à l'entrée un bruit et une consigne textuelle, pour générer à partir de ces éléments une image correspondant à la consigne textuelle. Un tel modèle de diffusion peut, par exemple, être généré selon des méthodes connues en soi, par exemple, telles qu'elles sont décrites dans les documents précités.

Le module d'entrée 12 est connecté en outre à une interface 22 de communication avec un utilisateur.

Cette interface 22 permet notamment à l'utilisateur d'introduire une consigne textuelle qui doit correspondre à l'image générée par le système de génération 10.

Cette interface 22 peut se présenter sous toute forme d'interface connue en soi et peut être raccordée au module d'entrée 12 directement ou alors indirectement, par exemple via un réseau informatique.

Le module d'entrée 12 permet de recevoir également un fichier de paramétrage 23 définissant un ensemble de paramètres nécessaires pour le fonctionnement du système de génération 10.

Cet ensemble de paramètres peut être introduit, par exemple, par l'utilisateur via l'interface 22 pour chaque nouvelle consigne textuelle ou alors pour plusieurs consignes textuelles.

Le module de traitement 14 permet de traiter l'ensemble des données acquises par le module d'entrée 12 afin de générer notamment une image correspondant à la consigne textuelle introduite via l'interface 22.

Pour ce faire, le module de traitement 14 permet de mettre en œuvre le procédé de génération tel qu'il sera décrit plus en détail par la suite.

Enfin, le module de sortie 16 permet de fournir l'image 25 générée par le module de traitement 14 à tout système intéressé.

Un tel système intéressé peut par exemple correspondre à une interface d'interaction avec l'utilisateur tel qu'un écran ou alors un système capable d'envoyer cette image à un autre système via par exemple un réseau informatique sous la forme d'un fichier.

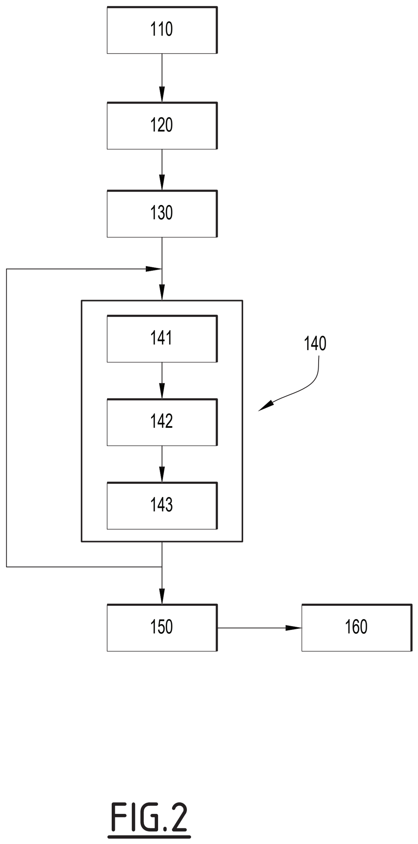

Comme indiqué précédemment, le système de génération 10 permet de mettre en œuvre le procédé de génération dont un premier mode de réalisation sera désormais décrit en détail en référence à la figure 2 présentant un organigramme de ses étapes.

Lors d'une étape initiale 110, le module d'entrée 12 acquiert l'ensemble des données issues de la base de données 21, de l'interface 22, ainsi que du fichier de paramétrage 23.

Comme expliqué précédemment, ces données peuvent comprendre un modèle de diffusion issu de la base de données 21, une consigne textuelle issue de l'interface 22, ainsi qu'un ensemble de paramètres issu du fichier de paramétrage 23.

Cet ensemble de paramètres comprend par exemple un ratio de coupures nécessaires pour le fonctionnement d'un filtre passe-bande tel qu'il sera expliqué plus en détail par la suite. Ce ratio de coupure est compris par exemple entre 0,1 et 0,2, il peut par exemple être sensiblement égal à 0,15.

Selon les différents modes de réalisation, cet ensemble de paramètres peut comprendre en outre un nombre d'itérations de l'étape de diffusion ou une valeur de performance devant être atteinte par l'image générée par le module de traitement 14.

Cet ensemble de paramètres peut comprendre également au moins certains paramètres permettant de paramétrer le fonctionnement du modèle de diffusion.

À la fin de cette étape 110, le module d'entrée 12 transmet l'ensemble des données acquises au module de traitement 14.

Lors d'une étape suivante 120, le module de traitement 14 initialise une image par un bruit aléatoire.

Selon un exemple de réalisation, ce bruit aléatoire comprend un bruit gaussien. Alternativement, ce bruit peut être de tout autre type connu en soi.

La taille de l'image initialisée correspond à celle devant être générée par le système de génération 10.

Lors d'une étape 130 suivante, le module de traitement 14 décompose l'image initialisée en une image basses fréquences et une image hautes fréquences.

Les basses fréquences et les hautes fréquences sont déterminées en fonction du ratio de coupure tel que défini précédemment.

Selon un autre exemple de réalisation, les basses fréquences et les hautes fréquences sont distinguées selon un seuil de fréquence qui est également paramétrable. Ce seuil, exprimé par exemple en cycles/pixels, est par exemple égal à 0,1. De manière générale, une fréquence exprimée en cycles/pixels varie de 0 à 0,5, ou en prenant en compte les valeurs négatives, de - 0,5 à 0,5.

Pour décomposer l'image, le module de traitement 14 applique une transformée de Fourier et un filtre passe-bas.

Ce filtre passe-bas peut, par exemple, correspondre à un filtre de Butterworth.

En particulier, en dénotant l'image initialisée par *xₜ*, le filtre passe-bas par *β* et la transformée de Fourier par *F,* la décomposition de l'image *xₜ* peut prendre la forme suivante : ${l}^{∧} f = {F}^{- 1} \left(F\left({x}_{t}\right)⊙β\right)$ ${h}^{∧} f = {F}^{- 1} \left(F\left({x}_{t}\right)⊙\left(1-β\right)\right)$ où ${l}^{∧} f$ désigne l'image basses fréquences et ${h}^{∧} f$ désigne l'image hautes fréquences. Autrement dit : ${x}_{t} = {l}^{∧} f + {h}^{∧} f .$

Lors d'une étape suivante 140, le module de traitement 14 met en œuvre une diffusion inverse de l'image conformément à la méthode GSN telle qu'expliquée par exemple dans le document Hila Chefer et al. : « Attend-and-Excite: Attention-Based Semantic Guidance for Text-to-Image Diffusion Models *».*

Cette étape de diffusion 140 est mise en œuvre suivant plusieurs itérations.

Le nombre de ces itérations correspond, par exemple, à l'un des paramètres reçus par le module d'entrée 12 lors de l'étape d'acquisition 110.

Alternativement, le nombre d'itérations est déterminé par une valeur de performance telle qu'elle sera expliquée plus en détail par la suite. Par exemple, les itérations sont arrêtées lorsque cette valeur de performance atteint une certaine valeur qui est également paramétrable.

L'étape de diffusion inverse comprend une pluralité de sous-étapes.

En particulier, lors d'une première sous-étape 141, le module de traitement 14 calcule une pluralité de cartes d'attention *A* en utilisant le modèle de diffusion *DM* acquis par le module d'entrée 12.

Ce modèle de diffusion *DM* est appliqué à une image reconstituée *x̂ₜ* et est contraint par la consigne textuelle *p.* Autrement dit : $ADM \left(\hat{{x}_{t}}, p\right) .$

L'image reconstituée correspond à la somme de l'image basses fréquences et l'image hautes fréquences telle qu'elle est disponible lors de l'itération en cours de l'étape de diffusion inverse 140. Autrement dit : $\hat{{x}_{t}} = {F}^{- 1} \left(F\left({x}_{t}\right)⊙β\right) + {h}^{∧} f .$

L'image reconstituée comprend donc le bruit partiellement diffusé. Avantageusement, le modèle de diffusion *DM* est appliqué à ce bruit partiellement diffusé.

En particulier, chaque carte d'attention *A* correspond à une sortie intermédiaire du modèle de diffusion *DM* et est calculée pour chaque jeton (« *token* » en anglais) de la consigne textuelle. Si un objet est décomposé en une pluralité de jetons, on conserve la moyenne de la pluralité des cartes d'attention correspondant à ces jetons.

Lors d'une sous-étape 142 suivante, le module de traitement 14 met en œuvre un guidage sémantique à partir des cartes d'attention extraites lors de la sous-étape 141. Selon l'invention, le guidage sémantique est mis en œuvre uniquement sur l'image basses fréquences.

Autrement dit, lors des itérations de l'étape 140, seule l'image basses fréquences est modifiée alors que l'image hautes fréquences reste inchangée.

Un exemple d'un guidage sémantique est décrit par exemple dans le document Hila Chefer et al. : « Attend-and-Excite: Attention-Based Semantic Guidance for Text-to-Image Diffusion Models *».*

Ainsi, selon cet exemple, le guidage sémantique comprend une descente de gradient sur une fonction de coût calculée à partir des cartes d'attention. Autrement dit, cette descente de gradient peut s'écrire sous la forme suivante : ${l}^{∧} f = {l}^{∧} f - α {∇}_{{l}^{∧} f} L \left(A\right) ,$

où L est la fonction de coût.

Lors d'une troisième sous-étape 143, le module de traitement 14 détermine une valeur de performance de l'image reconstituée.

Cette image reconstituée correspond alors à la somme de l'image basses fréquences telle que mise en œuvre lors de la sous-étape 142 et de l'image à hautes fréquences.

La valeur de performance est par exemple déterminée par la valeur de la fonction de coût L telle que définie ci-dessus.

Lors d'une étape suivante 150, mise en œuvre après toutes les itérations de l'étape 140, le module de traitement 14 transmet au module de sortie 16 l'image reconstituée.

Le module de sortie 16 peut alors transmettre cette image reconstituée à tout système intéressé.

Dans certains exemples, le procédé comprend en outre une étape 160 de détermination d'un score de performance après plusieurs itérations des étapes 110 à 150. Par exemple, avant de mettre en œuvre l'étape 160, les étapes 110 à 150 sont réitérées en relation avec plusieurs consignes (par exemple quelques centaines) en générant pour chaque consigne plusieurs images (par exemple 16 ou 32 images par consigne).

Le score de performance est donc calculé sur une pluralité d'images en utilisant par exemple une métrique de type TIAM. Une telle métrique est décrite dans le document Grimal, P et al. : « TIAM - A Metric for Evaluating Alignment in Text-to-Image Generation *»* et consiste notamment à mesurer automatiquement le taux de succès de la génération de chaque objet de la consigne textuelle, ainsi que de son éventuelle couleur.

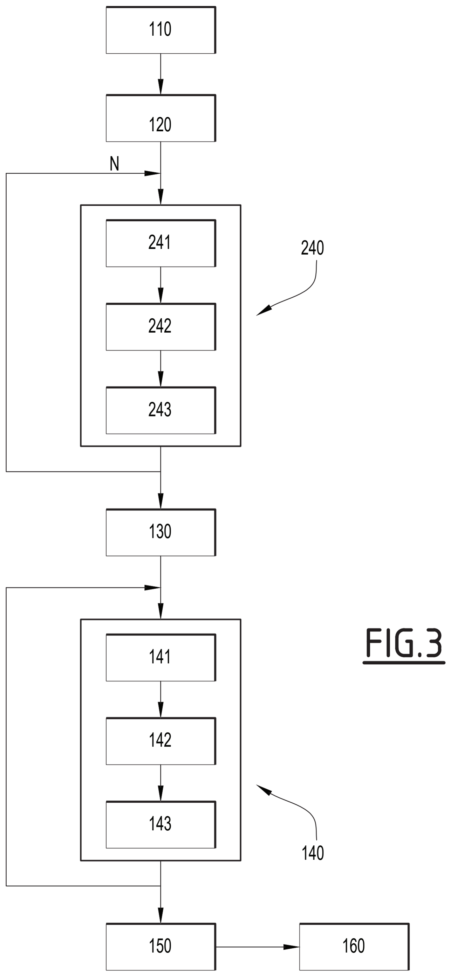

La figure 3 illustre un organigramme du procédé de génération selon un deuxième mode de réalisation.

Ainsi, et comme cela a été illustré sur cette figure 3, le procédé de génération selon le deuxième mode de réalisation comprend également les étapes 110 et 120, respectivement d'acquisition des données d'entrée et d'initialisation d'une image par un bruit aléatoire, telle qu'elle est expliquée précédemment.

Contrairement au procédé de génération selon le premier mode de réalisation, le procédé de dégénération selon le deuxième mode de réalisation comprend N itérations d'une étape 240 mise en œuvre après l'étape 120.

Cette étape 240 correspond à une diffusion inverse de l'image initialisée lors de l'étape 120 sans la distinction de cette image en basses et hautes fréquences.

Ainsi, comme dans le cas précédent, l'étape de diffusion inverse 240 comprend plusieurs sous-étapes.

Lors d'une première sous-étape 241, le module de traitement 14 calcule une pluralité de cartes d'attention en utilisant le modèle de diffusion tel qu'expliqué précédemment.

Contrairement à la sous-étape 141, l'extraction des cartes d'attention est mise en œuvre à partir de l'image initialisée ou alors modifiée lors d'une itération précédente de l'étape 240, sans décomposition de cette image en basses et hautes fréquences.

Lors d'une deuxième sous-étape 242, le module de traitement 14 effectue un guidage sémantique à partir des cartes d'attention extraites lors de la sous-étape 241.

Contrairement à la sous-étape 142, lors de la sous-étape 242, le guidage sémantique est effectué sur l'image telle qu'initialisée ou telle que modifiée lors d'une itération précédente de l'étape 240.

Lors d'une troisième sous-étape 243 qui est mise en œuvre d'une manière optionnelle, le module de traitement 14 détermine une valeur de performance de manière analogue à celle décrite en relation avec la troisième sous-étape 143.

L'étape 240 est réitérée N fois. Le nombre N est par exemple un paramètre prédéterminé ou correspond alors à un nombre d'itérations effectuées de l'étape 240 jusqu'à ce que la valeur de performance atteigne une valeur prédéterminée.

Après l'étape 240, le module de traitement 14 selon le deuxième mode de réalisation met en œuvre les étapes 130, 140 et 150 telles que décrites précédemment.

En particulier, lors de la mise en œuvre de l'étape 130, l'image décomposée en basses et hautes fréquences correspond à celle issue de l'étape 240.

Ainsi, lors de la mise en œuvre de l'étape 130, selon le deuxième mode de réalisation, le module de traitement 14 ne part pas d'un bruit pur mais bien d'une image prétraitée, c'est-à-dire d'un brut partiellement diffusé.

Les étapes 140 et 150 quant à elles sont mises en œuvre de la même façon qu'expliqué précédemment.

Dans certains modes de réalisation, pour déterminer le nombre optimal N d'itérations de l'étape 240, le module de traitement 14 teste plusieurs valeurs N.

Puis, à l'issue de ce procédé, le module de traitement 14 détermine le score de performance lors, par exemple, de l'étape 160.

Ensuite, le module de traitement 14 retient la valeur N permettant d'atteindre le meilleur score de performance.

Ainsi, l'image retenue peut correspondre à celle obtenue par le procédé correspondant à cette valeur N.

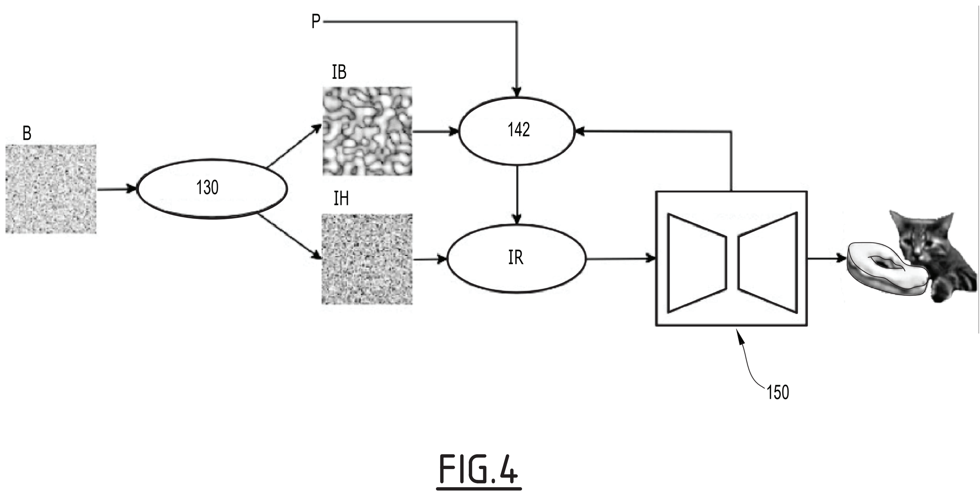

La figure 4 illustre schématiquement une mise en œuvre d'une partie du procédé selon le premier ou le deuxième mode de réalisation.

Ainsi, la figure 4 illustre la mise en œuvre de l'étape 130 de décomposition d'un bruit B ou alors d'une image prétraitée, une image basses fréquences IB et une image hautes fréquences IH.

Ensuite, le traitement tel que le guidage sémantique est appliqué uniquement à l'image basses fréquences IB en utilisant la consigne textuelle P.

Ensuite, les deux images sont fusionnées pour obtenir une image reconstituée IR qui est sortie lors de l'étape 150.

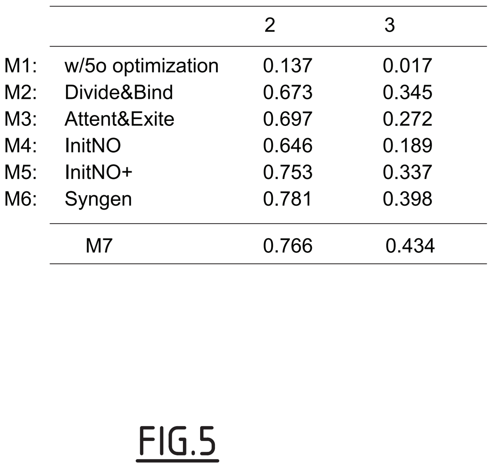

La figure 5 illustre le score de performance mesuré lors de la mise en œuvre de différents procédés de génération d'une image à partir de plusieurs consignes textuelles.

En particulier, ce tableau illustre un score de performance mesuré pour une consigne contenant 2 objets et un autre score de performance pour une consigne textuelle contenant 3 objets.

Les méthodes M1 à M6 correspondent à celles connues dans l'état de la technique et proposées notamment par les documents cités précédemment.

Parmi ces méthodes, la première méthode est une méthode qui est mise en œuvre sans toute optimisation (i.e. sans guidage sémantique GSN) et qui obtient alors le pire score.

La dernière méthode, à savoir la méthode M7, correspond à celle de la présente invention.

Il peut être observé que pour une consigne textuelle contenant deux objets, la méthode M7 obtient un score qui est comparable avec les 2 dernières méthodes, à savoir M5 et M6. Pour une consigne textuelle contentant 3 objets, cette méthode M7 obtient un résultat bien supérieur à ceux de chacune des méthodes connues dans l'état de la technique.

Ainsi, le procédé selon l'invention permet de résoudre le problème technique à savoir d'améliorer les performances de génération d'une image à partir d'une consigne textuelle.

## Revendications

1. Procédé de génération d'une image à partir d'une consigne textuelle, comprenant les étapes suivantes :
- initialisation (120) d'une image par un bruit aléatoire ;
- diffusion inverse (140, 240) de l'image comprenant les sous-étapes suivantes :
- calcul (141, 241) d'une pluralité de cartes d'attention en utilisant un modèle de diffusion pré-entrainé ;
- guidage sémantique (142, 242) à partir des cartes d'attention ;
l'étape de diffusion inverse (140, 240) étant mise en œuvre suivant plusieurs itérations ;
le procédé étant **caractérisé en ce qu'**il comprend en outre une étape de décomposition (130) de l'image en une image basses fréquences et une image hautes fréquences, et **en ce que** lors d'au moins certaines itérations de l'étape de diffusion inverse (140), dites itérations améliorées, le guidage sémantique (142) est mis en œuvre uniquement sur l'image basses fréquences.

2. Procédé selon la revendication 1, dans lequel lors de chaque itération améliorée de l'étape de diffusion inverse (140), l'extraction (141) des cartes d'attention est mise en œuvre à partir d'une image reconstituée, l'image reconstituée comprenant l'addition de l'image basses fréquences et de l'image hautes fréquences.

3. Procédé selon la revendication 1 ou 2, dans lequel chaque itération de l'étape de diffusion inverse (140) est une itération améliorée, l'étape de décomposition (130) de l'image étant mise en œuvre avant la première itération de l'étape de diffusion inverse (140).

4. Procédé selon la revendication 1 ou 2, dans lequel chaque itération de l'étape de diffusion inverse (140, 240) après N itérations de cette étape est une itération améliorée, l'étape de décomposition (130) de l'image étant mise en œuvre après la N-ième itération de l'étape de diffusion inverse (240).

5. Procédé selon la revendication 4, dans lequel le nombre N est déterminé en testant le procédé sur plusieurs nombres candidats et en déterminant un score de performance pour chacun de ces nombres, le nombre N retenu correspondant au meilleur score de performance.

6. Procédé selon l'une quelconque des revendications précédentes, dans lequel l'étape de décomposition (130) de l'image est mise en œuvre en utilisant une transformée de Fourier et un filtre passe-bas configuré pour filtrer des fréquences basses suivant un ratio de coupure paramétrable.

7. Procédé selon la revendication 6, dans lequel le ratio de coupure est compris entre 0,1 et 0,2.

8. Procédé selon la revendication 6 ou 7, dans lequel le filtre passe-bas est un filtre de Butterworth.

9. Procédé selon l'une quelconque des revendications précédentes, dans lequel le guidage sémantique (142, 242) comprend une descente de gradient sur une fonction de coût calculée à partir des cartes d'attention.

10. Procédé selon l'une quelconque des revendications précédentes, comprenant en outre une étape de détermination (160) d'un score de performance après plusieurs itérations des étapes d'initialisation (120) et de diffusion inverse (140, 240), le score de performance étant de préférence de type TIAM.

11. Programme d'ordinateur comportant des instructions logicielles qui, lorsqu'elles sont exécutées par un ordinateur, mettent en œuvre le procédé selon l'une quelconque des revendications précédentes.

12. Système de génération (10) d'une image à partir d'une consigne textuelle, comprenant des moyens techniques (12, 14, 16) configurés pour mettre en œuvre le procédé selon l'une quelconque des revendications 1 à 10.
